# EUROPEAN PATENT APPLICATION

(11) **EP 1 199 096 A1**
(43) Date of publication of application: **24.04.2002**
(21) Application number: 00122953.3
(22) Date of filing: 21.10.2000
(51) Int. Cl.: B01D 53/86, B01J 23/63

(54) **Catalyst for destruction of CO, VOC, and halogenated organic emissions**

(71) Applicant: Degussa AG, 40474 Düsseldorf (DE)
(72) Inventor: Reisinger, Dr. Martin, 79618 Rheinfelden (DE); Hausmann,Ralf, 63607 Wächtersbach (DE); Panster, Dr. Peter, 63517 Rodenbach (DE); Stochniol, Dr. Guido, 63571 Gelnhausen (DE); Tacke, Dr. Thomas, 42001 Paducah, KY (US); Baoshu, Chen, 42001 Paducah, KY (US)

(57) **Abstract**

The invention relates to a high performance catalyst containing a layer on an inert carrier body comprising noble metals from the platinum group deposited on support materials. The catalyst is characterised in that, the layer comprises platinum deposited in a washcoat consisting of A1203 which is stabilized with lanthana (La203), ceria (CeO2), which is stabilized with zirconia (ZrO2) and praseodymium (Pr6011). The supprot is promoted by sulfur-containing compounds which come from at least one of following compounds: platinum sulfite (PtSO3), sulfuric acid (H2SO4), ammonium sulfate ((NH4)2SO4), titanium oxysulfate (TiOSO4), titanium sulfate (Ti2(SO4)3), and zirconium sulfate (Zr(SO4)2).

## Description

This invention relates to a novel catalyst for the oxidative destruction of carbon monoxide and volatile organic compounds (VOC) emissions, in particular, gaseous carbonaceous emissions that include CO, VOC's and halogenated organic compounds.

Volatile organic compound emissions are subject to increasingly stringent regulations, and industries are required to use the best available technology to treat these contaminants before exhausting to atmosphere. Currently three major technologies are commonly used for the control of moderate concentrations (below 25% of the lower explosive limits [LEL]) of VOCs: carbon adsorption, thermal incineration, and catalytic incineration. Although carbon adsorption has the lowest initial capital cost, it is very inefficient (the carbon bed needs to be replaced frequently) for the removal of low concentrations of VOCs. In addition, since carbon beds adsorb moisture as well as VOCs, trace amounts of water vapor in the effluent tend to saturate the bed and render it ineffective for the adsorption of dilute VOCs. Furthermore, adsorption efficiency can be adversely impacted by fluctuating concentrations of the gaseous components.

Conversely, thermal incineration is very effective in destroying VOCs but due to the extremely high temperatures required, ( ≈ 1000°C), the operating and equipment costs are very high. In addition, the high reaction temperatures result in the formation of NOₓ. While the efficiency for VOC destruction for catalytic incinerators are as high as those for thermal incinerators, their operating costs are about 50% of those for thermal incinerators because catalytic incinerators operate at much lower temperatures (<500°C). The lower temperatures also result in lower equipment costs and ensure that oxides of nitrogen are not formed.

Methods for the catalytic oxidation of non-halogenated organic and halogenated organic compounds are well known in the art. For example, US patent No. 4,983,366 describes a method for the catalytic conversion of waste gases containing hydrocarbons, halogenated hydrocarbons and carbon monoxide. The waste gases are successively treated at 300 - 800 C with a catalyst for oxidative cracking and with a catalyst for oxidative afterburning.

US patent Nos. 5,176,897 and 5,292,704 describe a catalyst and a process using this a catalyst to convert or destroy organic compounds including organohalogen compounds. This catalyst contains titania, vanadium oxide, tungsten oxide, tin oxide and at least one noble metal selected from the group consisting of platinum, palladium and rhodium, characterized in that vanadium oxide, tungsten oxide and noble metals are uniformly dispersed on the titania.

US Patent No. 5,643,545 describes a method for the treatment of streams containing halogenated organic compounds and volatile organic compounds with catalytic materials deposited on high acidity and/or low acidity supports.

US Patent Nos. 5,653,949, 5,578,283 and 5,283,041 describe a catalyst and a process for treating gas streams which contain halogenated organic compounds, non-halogenated organic compounds, carbon monoxide or mixtures thereof, and particularly gas streams which contain organobromides. The catalyst comprises at least one platinum group metal, zirconium oxide and at least one oxide of manganese, cerium or cobalt.

European Patent Application No. 0,793,995 describes a method for treating a gas flow containing organohalogen compounds comprising the steps of contacting the gas flow with catalyst at a temperature below 500 C in the presence of an effective amount of steam. The catalyst contains titania tungsten oxide, and silica, and atomic ratio of Ti and W is in the range of 20 ~ 95 mol% Ti and 80 ~ 5 mol% W, and the amount of silica to titania is in the range of 0.5 ~ 15 wt%.

US Patent No. 5,895,636 and PCT International Application No. PCT/US98/24959 describe a method for oxidizing halogenated and non-halogenated organic compounds while suppressing halogenation of non-halogenated compounds with a catalyst comprising platinum, palladium, or mixtures thereof supported on an alumina with a surface area from 80 m2/g to 300 m2/g, wherein the alumina is stabilized with an alkaline earth metal oxide and a rare earth metal oxide, and contains less than 1 weight % ceria (as Ce203).

There is still a need for catalysts for the oxidative destruction of carbon monoxide, non-halogenated VOC's and halogenated VOC's to provide enhanced operating efficiencies at lower temperatures. Also, the existing catalysts need to be improved for the stability in the presence of halogens which forms during the oxidation of halogenated VOC's and poisons the catalysts, and for the selectivity to minimize the formation of halogenated benzene polymers (such as polybromobenzenes) which is in solid form and cause plugging or blockage in process lines.

The present invention is related to a catalyst compositions useful for the oxidative destruction of carbon monoxide and volatile organic compounds (VOC) emissions, in particular, gaseous carbonaceous emissions that include CO, VOC's and halogenated organic compounds. The catalysts and processes are particularly suitable for treating gas streams which are from purified terephthalic acid exhaust and contain brominated organic compounds.

One embodiment of this invention is a catalyst for treating a gas stream which contains compounds selected from the group consisting of carbon monoxide, non-halogenated organic compounds, halogenated organic compounds and mixtures thereof. The catalyst useful in the practice of this invention comprises one or more noble metals from the platinum group deposited on support materials. The term "support material" or "support" is used in the present invention to designate a particulate material onto which catalytically active components such as the noble metals from the platinum group of elements or other promoter components can be deposited in highly dispersed form, i.e. with crystallite sizes between 1 and 10 nm. For that purpose the support materials should have a specific surface area (also called BET surface, measured according to DIN 66132) of more than 5 m²/g. The support material useful in the practice of this invention comprises alumina (Al2O3) which is stabilized with lanthana (La203), ceria (CeO2) which is stabilized with zirconia (ZrO2), praseodymuim (Pr6O11), and ZrO2. This support is also promoted by sulfur-containing compounds which come from at least one of following compounds: platinum sulfite (PtS03), sulfuric acid (H2S04), ammonium sulfate ((NH4)2SO4), titanium oxysulfate (TiOSO4), titanium sulfate (Ti2(S04)3) (NH4)2S2O3, Ce-sulfate, La-sulfate and zirconium sulfate (Zr(SO4)2).

Ce(S04)2,sulphated TiO2, ZrO2 and CeO2, which can be formed by co-precipitation of aqueous MeO(OH)2 with (NH4)2SO4 with Me = Ti, Zr or Ce or a mixture thereof. The precipitation is than dried and calcined.

Another embodiment of this invention is a process for treating a gas stream which contains compounds selected from the group consisting of carbon monoxide, non-halogenated organic compounds, halogenated organic compounds and mixtures thereof. The process comprises contacting such a gas stream at a temperature from about 150 C to 500 C with a catalyst comprising one or more platinum group metals, Al2O3, La203, CeO2, Pr6O11, ZrO2, and at least one of sulfur-containing compounds such as PtSo3, H2S04, NH4)2SO4, TiOSO4, Ti2(S04)3, and Zr(S04)2 in the presence of an effective amount of oxygen to facilitate oxidation reaction.

Specific embodiments of the catalyst according to the invention will now be explained in more detail.

The support of the catalyst is selected from the group consisting of silica, alumina, titania, zirconia, mixed oxides or mixtures therefrom. The term "mixed oxide" designates an intimate mixture of two or more oxides on an atomic level which may be regarded as a new chemical compound, while the term mixture designates the mechanical mixture of two or more particulate oxide materials.

Most advantageously, the supports are selected from activated aluminas, optionally complemented by zirconia or a zirconia-rich zirconia mixed oxide. Activated aluminas exhibit specific surface areas of up to 400 m²/g. They comprise the various phases from the transition aluminas which are formed by heating aluminium hydroxides in air (see Ullmann's Encyclopaedia of Industrial Chemistry; Fifth Edition, 1985, Volume A1, pages 561 and 562). For improved temperature stability, the active aluminas can be stabilised with 0,5 to 20 wt.-% of lanthana. Such materials are commercially available. The frequently used stabilisation of alumina with barium oxide (baria) is less preferred if alumina is used as support material for platinum because this bears the risk of formation of barium platinate.

The term "zirconia-rich" means that the material contains at least more than 50% by weight of zirconia, preferably more than 60 and most preferable more than 80% by weight, the balance being formed by yttria, neodymia, calcium oxide (calcia), silica, lanthana or ceria which serve to stabilise zirconia against thermal stresses. Most preferably a zirconia-rich zirconia/ceria mixed oxide is used. Pure zirconia and the stabilised zirconia compounds will be summarised under the term "zirconia component" in the following.

The support also contains ceria-rich ceria/zirconia mixed oxide compounds with a ceria concentration of from 60 to 90 wt.-% relative to the total weight of the mixed oxide. Such materials are available with specific surface areas of 20 to 200 m²/g and exhibit a good temperature stability of the surface area. Further improvements can be obtained by stabilising this material with praseodymia, yttria, neodymia, lanthana or mixtures thereof. For stabilisation concentrations of the stabilising compounds of from 0,5 to 10 wt.-%, relative to the total weight of the stabilised material, are sufficient. Stabilising of ceria using praseodymia, neodymia, lanthana or mixtures thereof is described in German patent application DE 197 14 707 A1.

The catalyst carrier body used in the present invention is in the form of a honeycomb monolith with a plurality of substantially parallel passage ways extending therethrough. The passage ways are defined by walls onto which the catalytic coating is applied.

The passage ways of the carrier body serve as flow conduits for the exhaust gas which contains CO, VOC's and halogenated organic compounds. When flowing through these passages, the exhaust gas comes into close contact with the catalytic coating, whereby the pollutants contained in the exhaust gas are converted into benign products. The carrier bodies may be manufactured from any suitable material, such as from metallic or ceramic materials, as is well known in the art. The passage ways are arranged in a regular pattern over the cross section of the carrier bodies. The so-called cell density (passage ways per cross sectional area) may vary between 100 and 900 cpsi (cell per square inch). Other suitable carrier bodies may have an open cell foam structure. Metallic or ceramic foams may be used.

The catalytic coating is applied to the carrier body in amounts of from about 50 to 300 g/l. Platinum is present in the catalytic coating in concentrations of from 0,01 to 5, preferably from 0,05 to 1 wt.-%, relative to the total weight of the coating. The concentration of platinum relative to the volume of the catalyst carrier ranges from 0,01 to 10 g/l, with concentrations between 0,05 and 2 g/l being most suitable.

In a most preferred embodiment, the support comprises an active alumina with a specific surface area between 50 and 200 m²/g stabilised with lanthana, an ceria selected from ceria-rich ceria/zirconia mixed oxides containing 60 to 90 wt.-% of ceria and additionally stabilised with 0,5 to 10 wt.-% of praseodymia (Pr₆O₁₁), ZrO2, and TiOSO4.....

The catalyst of the present invention may be manufactured in various ways. Some of them will be described below:

For providing the coating layer, the passage ways of the catalyst carrier can be coated with an aqueous coating composition comprising the particulate support materials. The coating composition will also be called coating dispersion within the context of this invention. The techniques for coating catalyst carriers with such a coating composition are well known to the expert. The coating is then dried and calcined in air. Drying is preferably done at elevated temperatures of up to 150°C. For calcining the coating, temperatures of from 200 to 650°C for a period from 0,1 to 10 hours should be applied.

After calcination, platinum may be dispersed onto the coated carrier body by dipping the monolith into a solution containing a precursor compound of platinum. The solution may be an aqueous or non-aqueous (organic solvent) solution. Any platinum precursor compound may be used, provided the compound is soluble in the chosen solvent and decomposes upon heating in air at elevated temperatures. Illustrative of these platinum compounds are chloroplatinic acid, ammonium chloroplatinate, platinum tetrachloride hydrate, platinum dichlorocarbonyl dichloride, dinitrodiamino platinum, platinum nitrate, platinum tetraammine nitrate, platinum tetraammine hydroxide, and platinum sulfite. After impregnation, the coating is again calcined at temperatures between 200 and 650°C in air.

Alternatively, the coating layer may by prepared by first impregnating the particulate materials of the washcoats with an aqueous solution of a soluble precursor compound of platinum, drying and calcining the impregnated particulate materials to thermally fix platinum thereon. This catalysed material is then used to prepare the aqueous coating composition for coating the walls of the passage ways of the carrier body. The coating is then dried and calcined as described above.

In a preferred method for providing the coating layer there is prepared an aqueous dispersion from the particulate materials of the washcoats. For depositing and fixing platinum onto the particulate materials of the dispersion, a solution of platinum precursor compounds is injected slowly into the dispersion, and then the platinum compound is precipitated onto the particulate materials by properly adjusting the pH-value of the dispersion to yield the final coating composition. During injection and precipitation, the dispersion is continuously agitated to rapidly distribute the injected solution homogeneously over the whole volume of the dispersion. The precipitated compounds firmly adhere to the supporting materials.

The method of precipitation by injection is described in German patent applications DE 197 14 732 A1 and DE 197 14 707 A1. In the following it is also called injection precipitation.

Suitable platinum precursor compounds for this deposition method are those already described above. In addition, amine solubilised platinum compounds such as methylethanolamine platinum (IV) hexahydroxide

((MEA)₂Pt(OH)₆ = ((OH-C₂H₄-NH₂-CH₃)₂⁺Pt^{IV}(OH)₆)

and ethanolamine platinum (IV) hexahydroxide ((EA)₂Pt(OH)₆ = (OH-C₂H₄-NH₃)₂⁺Pt^{IV}(OH)₆) or other organic derivatives of quaternary ammonium salts may be used. These anionic complex compounds of platinum are known to yield platinum metal deposits of high dispersion.

The amine solubilised precursor compounds give highly basic aqueous solutions. When using alumina as support material, the amine solubilised precursor compounds are readily fixed onto the surface of alumina by adsorption. By neutralising the dispersion, the adsorbed species can be fixed chemically.

The coating dispersion thus prepared is then used to coat the walls of the passage ways of the carrier body. Afterwards the coating is dried and calcined in air.

The above described method of injection precipitation is preferred because it involves only one drying and calcining step whereas the first two methods each require two drying and calcining steps.

Preferably, the washcoat also contains ceria which is selected from a ceria-rich ceria/zirconia mixed oxide stabilised with praseodymia. An already stabilised material may be used or stabilisation may be effected in a separate manufacturing step. Ceria/zirconia may also be stabilised with praseodymia in situ during the preparation of the washcoat mentioned above. For that purpose, a solution of a praseodymia precursor compound may be prepared and ceria/zirconia is dispersed therein. Then ammonia is injected into the dispersion to precipitate the precursor compound onto ceria/zirconia. Suitable praseodymium precursor compounds are praseodymium acetate or nitrate.

The resulting dispersion is then used to prepare the final coating composition by further adding active alumina and optionally a particulate zirconia component. The particulate materials of this dispersion are then catalysed with platinum by the already discussed injection precipitation.

After having deposited the washcoat onto the catalyst carrier, the impregnation with TiOSO4 etc. may be prepared as follows:

Solid TiOSO4 is disolved into deionised water until a clear solution is reached. The coated monolith can be dipped into this solution or the solution can be poured into the honeycomb system. The solution can also be sprayed or injected into the channels of the monolith. The wet monolith is dried at temperatures up to 150 °C for 0,1 - 10 hours. Finally the dried monolith is heated between 200 and 650 °C for a period of 0,1 - 10 h.

In summary, in a most preferred embodiment of the invention, the coating layer (washcoat) of the catalyst comprises platinum deposited on active alumina and on ceria-rich ceria/zirconia mixed oxide. This catalyst is obtainable by the following process steps:
a) preparing a solution of a praseodymium precursor, adding ceria/zirconia mixed oxide and adjusting the pH-value of the dispersion to thereby precipitate the praseodymium precursor onto ceria/zirconia,
b) further adding alumina and optionally a zirconia component to the dispersion of step a),
c) injecting a solution of a platinum precursor into the dispersion of step b) and precipitating it onto alumina, ceria/zirconia and optionally the zirconia component to obtain a coating composition for the catalyst,
d) coating a monolithic carrier with said coating composition and drying and calcining the coating to thereby obtain a carrier coated with said washcoat,
e) preparing a dispersion of active alumina and injecting a solution of a platinum compound into this dispersion,
f) drying and calcining the coated monolithic carrier.

Most preferably, the active alumina used in step a) is stabilised with 0,5 to 20 wt.-% of lanthana. In the above described method, the support materials and ceria/zirconia are in situ stabilised with praseodymia. Alternatively, stabilisation of ceria/zirconia with praseodymia, yttria, neodymia, lanthana or mixtures thereof may be achieved in a separate step with the above doping compounds by impregnation, injection precipitation, co-precipitation, or co-thermohydrolysis.

For stabilising ceria/zirconia by impregnation, the particulate ceria/zirconia is wetted with an aqueous solution of precursor compounds of the desired doping element and then dried and calcined. Frequently, pore volume impregnation is employed for that purpose. In that case the precursor compounds are solved in an amount of water which corresponds to the water absorption capacity of the ceria/zirconia.

Injection precipitation has already been explained above for the deposition of the noble metal compounds onto the support materials.

For stabilising ceria/zirconia by co-precipitation, a common solution is prepared from ceria and zirconia precursor compounds and from a precursor compound of the stabilising element. Then the three compounds are simultaneously precipitated by adding a suitable precipitating agent. Thus, ceria/zirconia stabilised with praseodymium may be manufactured by preparing a common solution of cerium nitrate, zirconium nitrate and praseodymium nitrate, and adding ammonium carbonate or ammonium oxalate so that cerium, zirconium and praseodymium are precipitated simultaneously as carbonates or oxalates. After filtration and drying, the desired stabilised ceria/zirconia is obtained by calcination. Alternatively, co-precipitation can also be effected in a basic medium.

For stabilising ceria/zirconia by co-thermohydrolysis, a sol is prepared from cerium hydroxynitrate, zirconium hydroxynitrate and the hydroxynitrate of the doping element. Then the sol is dewatered by increasing the temperature. Thereby the hydroxynitrates are decomposed to form the corresponding oxides. Co-thermohydrolysis is described e.g. in WO 98/16472.

The beneficial properties of the catalyst according to the invention will now be explained further with the help of the following examples.

### Example 1:

0.094 g of platinum nitrate solution with 31.9 wt% Pt was diluted to 1.84 ml with DI water. 2.97 g of the support in powder form was impregnated with this solution. The material was aged at ambient temperature for 5 h, dried at 120 C overnight, and then calcined at 500 C for 1 h with a constant air flow rate of approx. 130ml/min.

### Example 2:

The powder catalyst made in example 1 was tested in a microreactor. A total of 1/2 ml of the catalyst powder was placed on a quartz frit in a U-shaped, downflow reactor. A reactant mixture which contains CO, CH₃Br, C₆H₆, and CH₃COOCH₃ was used. The concentration is 35 ppm CH₃Br, 410 ppm methyl acetate, 9 ppm benzene, and 3500 ppm CO. Carbon monoxide and CH₃Br were supplied through gas cylinders and metered by mass flow controllers, and C₆H₆ and CH₃COOCH₃ were mixed and injected into the inlet of the reactor using a syringe pump. The gas hourly space velocity was 60,000 h⁻¹. Ambient pressure was used for the test, and high pressure is expected to increase the catalytic activity. The catalyst temperature was stepped to the desired temperature, and the gas streams allowed to flow over the catalyst until steady-state behavior is observed. The effluent of the catalyst test cell was introduced into a gas chromatograph (GC) using a 10 position switching valve. GC-FID is used to detect methyl acetate, benzene, methyl bromide, and possible byproducts, and CO-NDIR is used to detect CO concentration. The conversion of various reactants was calculated based on the inlet and outlet concentrations.

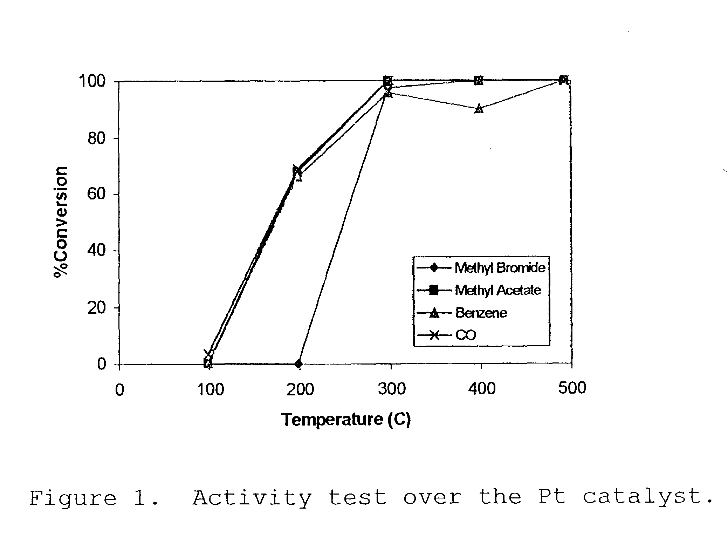

As shown in Figure 1, a 100% conversion of CO was observed at 200 C, and more than 75% methyl acetate and benzene were converted at this low temperature. At 300 C, more than 95% conversion was obtained for all compounds including methyl bromide.

### Preparation of coating layer:

To a solution of praseodymium acetate a cerium rich oxygen storage component (70 wt-% ceria, 30 wt-% zirconia) was added. By controlled injection of ammonia and stirring for about 30 minutes, praseodymium acetate was precipitated onto ceria/zirconia. Subsequently, stabilised alumina (3 wt-% La₂O₃, 97 wt-% Al₂O₃) and bulk zirconia were added. After this, a platinum solution ((EA)₂Pt(OH)₆) was injected into the slurry and platinum was precipitated onto alumina and ceria/zirconia by proper adjustment of the pH-value of the dispersion with acetic acid. After milling the slurry, a monolithic carrier was dipped into the slurry to apply the first layer.

The complete washcoat uptake was 160 g/l. Finally the first layer was dried and thereafter calcined in air at 500°C.

The final catalyst had the composition given in table 1:

**Table 1:**

| Composition of coating layer of catalyst | |
|---|---|
| Component | concentration [g/l] |
| Alumina (stabilised with 3 wt.-% La₂O₃) | 80 |
| CeO₂/ZrO₂ (70 wt.-% CeO₂; 30 wt.-% ZrO₂) | 51,7 |
| Pr₆O₁₁ | 4,3 |
| ZrO₂ | 24 |
| Total oxide content | **160** |
| Platinum | 0,94 |

### Example 3:

52 g of TiOSO4 was dissolved in 1 litre of DI water until all material is dissolved. The monolith with the discribed Pt containing washcoat was dipped into the solution. The sample was dried at 150 °C for 5 hours. Finally the prepared sample was annealed at 550 °C for another 5 hours to form the final catalyst.

Further variations and modifications of the foregoing will be apparent to those skilled in the art and are intended to be encompassed by the claims appended hereto.

### Comparison Example 1:

A commercial monolithic PTA off-gas catalyst was used for comparison. This monolith catalyst consists also of a Pt containing washcoat system. No TiSO4 addition was used for catalyst preparation.

### Evaluation of catalysts:

A piece (diameter one inch, length 5 cm) of the catalysts from the above described samples was drilled out of the monolith. This catalyst piece was placed in a tubular reactor. The reactor was heated up to 150°C. During the heating Nitrogen was passed through the system. O2, CO, MeBr, benzene, toluene, p-xylene, H2O and methylacetate was added to the nitrogen stream when the temperature was reached. The amounts are given in table 2. A GHSV of 10000 h⁻¹ was adjusted at a pressure of 200 psi was adjusted to the system. The analysis of the outlet gas was performed by online GC-analysis.

**Table 2:**

| Composition of the test gas for catalyst evaluation | |
|---|---|
| Component | concentration |
| N2 | balance |
| 02 | 3.0 % |
| CO | 3500 ppm |
| methylbromide | 35 ppm |
| benzene | 9 ppm |
| toluene | 2 ppm |
| p-xylene | 8 ppm |
| H20 | 0.43 % |
| methanol | 35 ppm |
| methylacetate | 410 ppm |

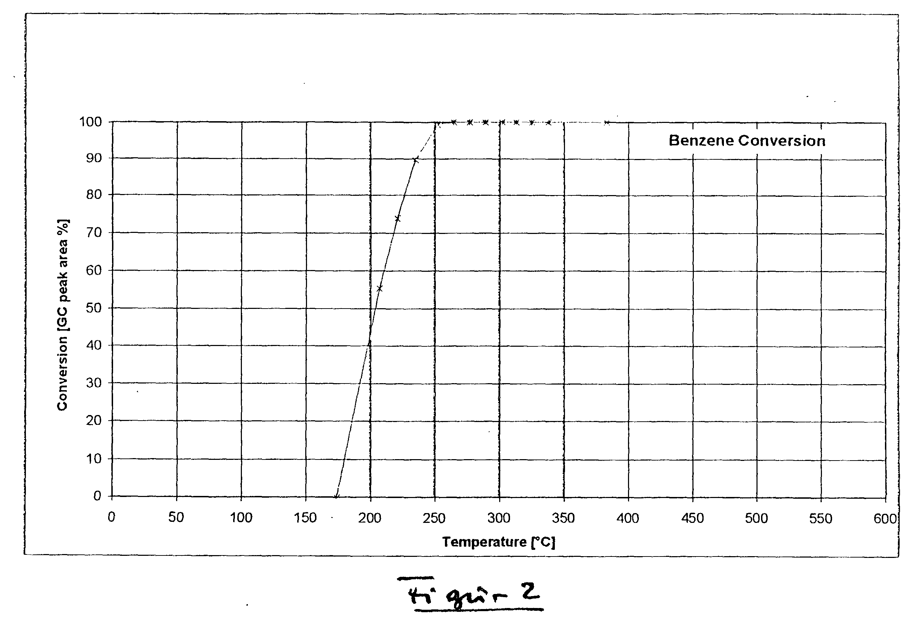

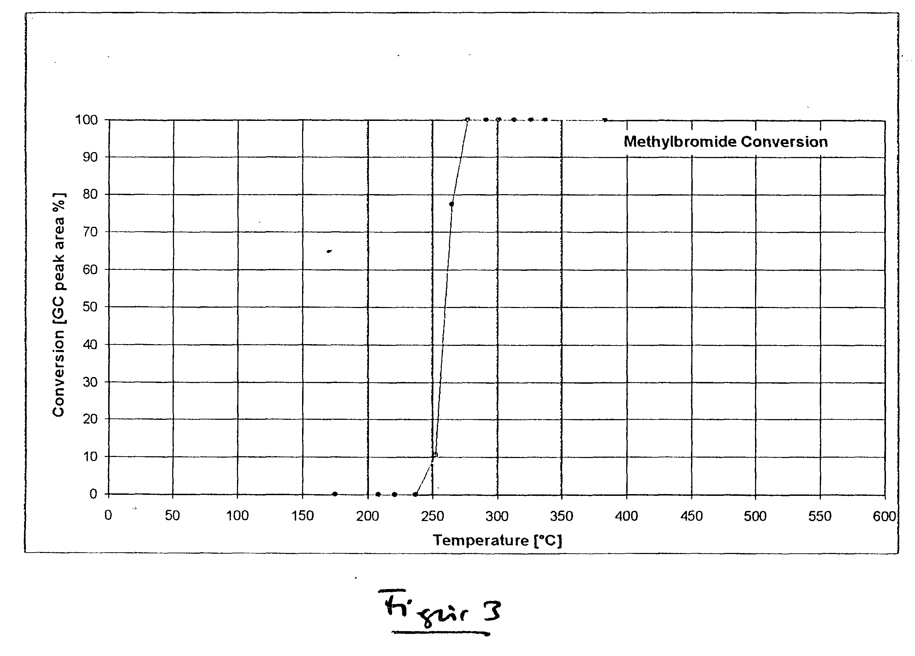

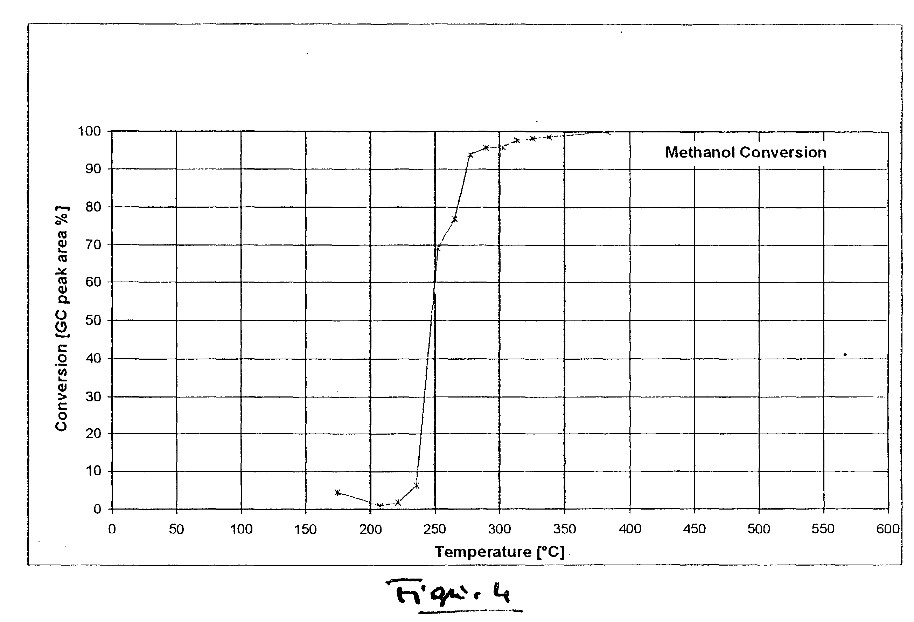

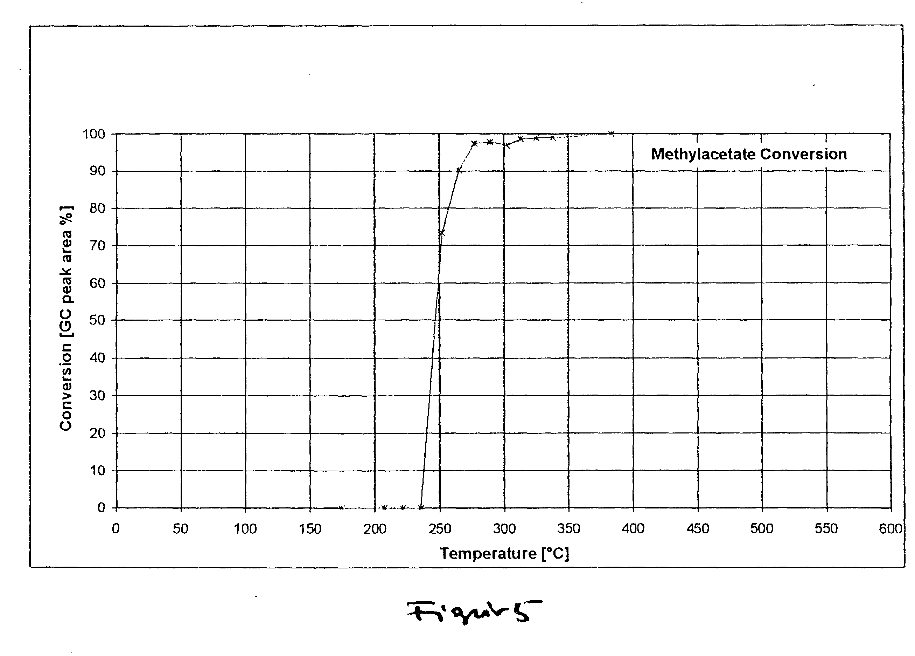

For the example 3 the results of the conversion are shown in the figures 2, 3, 4 and 5.

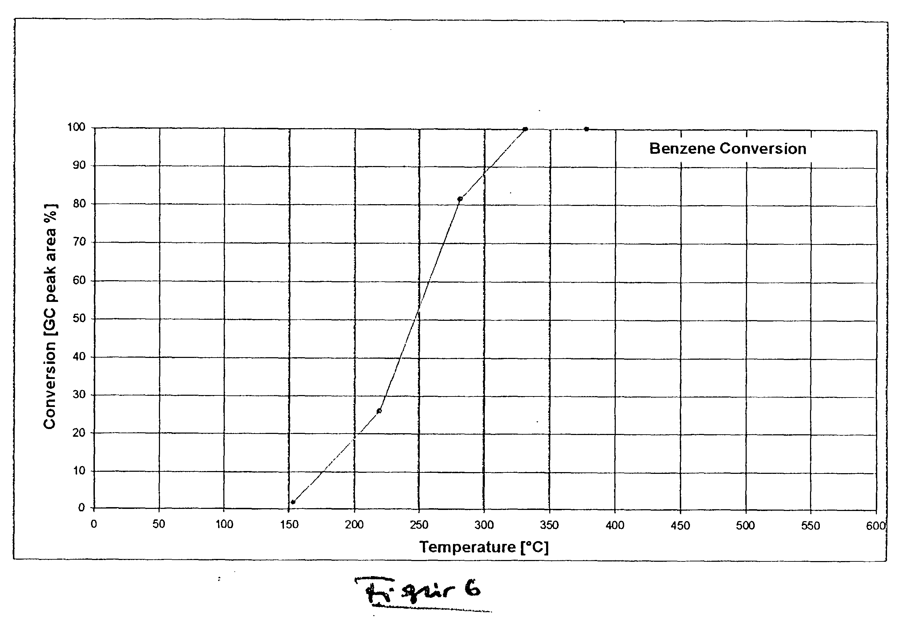

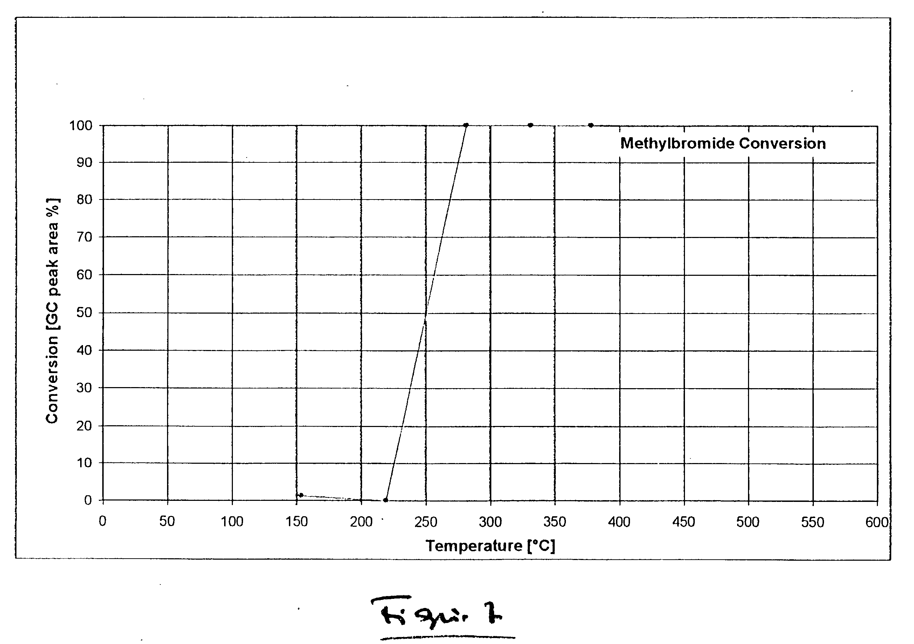

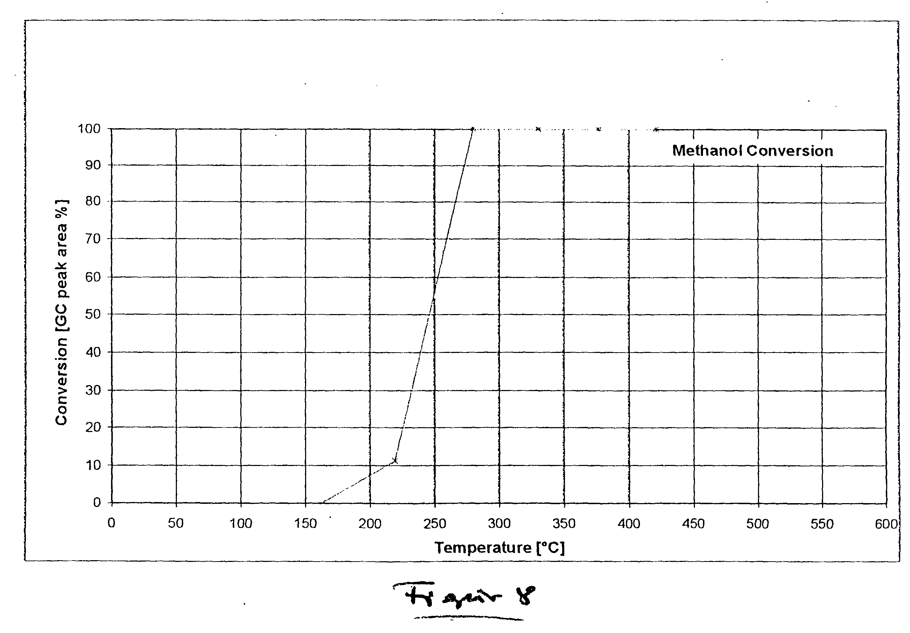

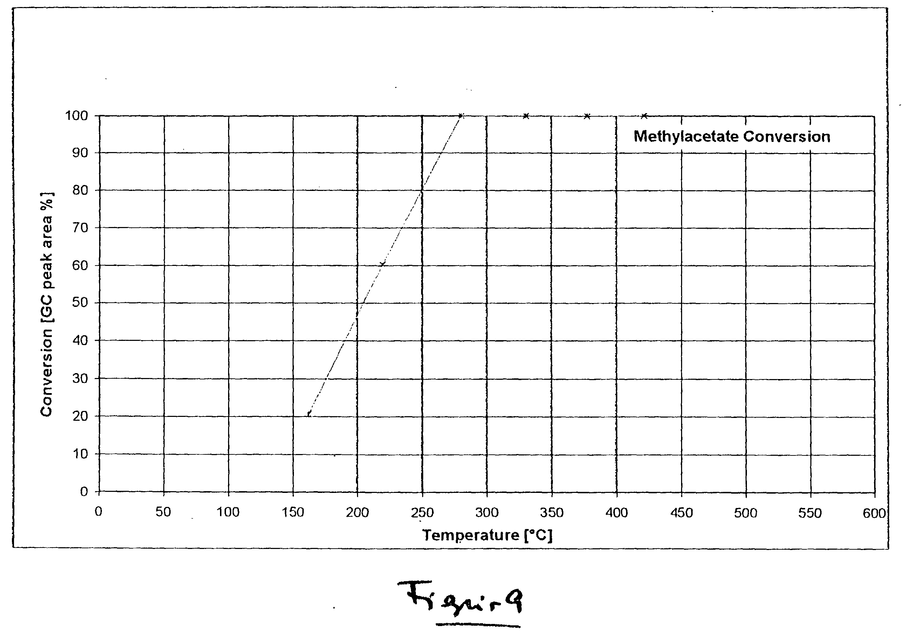

For the comparison example 1 the results of the conversion are shown in the figures 6, 7, 8 and 9

## Claims

1. High performance catalyst containing a layer on an inert carrier body comprising noble metals from the platinum group deposited on support materials,
**characterised in that**,
the layer comprises platinum deposited on compounds selected from the group consisting of silica, alumina, titania, zirconia, mixed oxides or mixtures therefrom and zirconia-rich zirconia/ceria mixed oxide.

2. The catalyst according to claim 1,
**characterised in that**,
the activated alumina is stabilised with 0,5 to 20 wt.-% of lanthana.

3. The catalyst according to claim 2,
**characterised in that**,
the support further comprises a zirconia component

4. The catalyst according to claim 2,
**characterised in that**,
the support further comprises ceria-rich ceria/zirconia mixed oxide compounds.

5. The catalyst according to claim 4,
**characterised in that**,
said ceria/zirconia mixed oxide compounds are stabilised with praseodymia, yttria, neodymia, lanthana or mixtures thereof.

6. The catalyst according to one of the claims 1 to 5,
**characterised in that**,
said carrier body is in the form of a honeycomb with a plurality of substantially parallel passage ways extending therethrough, the passage ways being defined by walls onto which the layer is applied in amounts of from about 50 to 350 g/l of the carrier body.

7. The catalyst according to claim 6,
**characterised in that**,
said alumina is present in amounts of from 20 to 150 g/l, said oxygen storage component is present in amounts of from 10 to 100 g/l and the zirconia support is present in amounts of from 5 to 60 g/l.

8. The catalyst according to claim 7,
**characterised in that**,
platinum is present in the layer in concentrations of from 0,01 to 5 wt.-% relative to the total weight of said layer.

9. The catalyst according to one of the claims 1 to 8,
**characterised in that**, the catalyst is further impregnated by at least one sulfur-containing compound such as PtSO3, H2SO4, (NH4)2SO4, TiOSO4, Ti2(SO4)3, and Zr(SO4)2.

10. The catalyst according to claim 9, **characterized in that**, the catalyst is calcined after impregnation by at least one sulfur-containing compound such as PtSO3, H2SO4, (NH4)2SO4, TiOSO4, Ti2(SO4)3, and Zr(SO4)2 in the presence of an effective amount of oxygen to facilitate the oxidation reaction.

11. A method for manufacturing a catalyst according to claim 1,
**characterised in that**,
the method comprises the steps of
a) coating the walls of the passage ways of the carrier body with a coating composition containing particulate materials comprising support materials,
b) drying and calcining said coating, and
c) dipping the coated carrier body into a solution of a soluble precursor compound of platinum and calcining the coating.

12. A method for manufacturing a catalyst according to claim 1,
**characterised in that**,
the method comprises the steps of
a) catalysing particulate materials comprising said support materials by impregnating them with a solution of a soluble precursor compound of platinum, drying and calcining the materials to thermally fix platinum thereon,
b) preparing an aqueous coating composition with the catalysed materials from step a) and coating the walls of the passage ways of the carrier body with this coating composition, and
c) drying and calcining said coating.

13. A method for manufacturing a catalyst according to claim 1,
**characterised in that**,
the method comprises the steps of
a) preparing a dispersion from particulate materials comprising said support materials and and injecting a solution of a soluble platinum precursor compound,
b) fixing the platinum compound on all particulate materials by adjusting the pH-value of the dispersion to thereby obtain a coating composition,
c) coating the walls of the passage ways of the carrier body with the aqueous coating composition from step a), and
d) drying and calcining said coating.

14. A method for manufacturing a catalyst according to claim 11 to 13,
**characterised in that**,
the catalyst is further impregnated by at least one sulfur-containing compound such as PtSo3, H2SO4, NH4)2SO4, TiOSO4, Ti2(SO4)3, and Zr(SO4)2.

15. A method for manufacturing a catalyst according to claim 14, **characterized in that**,
the catalyst is calcined after impregnation by at least one sulfur-containing compound such as PtSo3, H2S04, NH4)2SO4, TiOSO4, Ti2(SO4)3, and Zr(SO4)2 in the presence of an effective amount of oxygen to facilitate the oxidation reaction.

16. High performance catalyst according to claim 1,
**characterised in that**,
the catalyst layer comprises platinum deposited on active alumina and on ceria-rich ceria/zirconia mixed oxide and the catalyst is obtainable by
a) preparing a solution of a praseodymium precursor, adding ceria/zirconia mixed oxide and adjusting the pH-value of the dispersion to thereby precipitate the praseodymium precursor onto ceria/zirconia,
b) further adding active alumina to the dispersion of step a),
c) injecting a solution of a platinum precursor compound into the dispersion of step b) and precipitating it onto alumina and ceria/zirconia to obtain the layer of the catalyst, and
d) coating a monolithic carrier with said coating composition and drying and calcining the coating to thereby obtain a carrier coated with said layer.

17. Catalyst according to claim 16
**characterised in that**,
the active aluminas from step b) is stabilized with 0.5 to 20 wt.-% of lanthana.

18. Catalyst according to claim 16, **characterised in that**,
in step b) a further zirconia component is added.

19. A method for oxidizing a gas stream which contains compounds selected from the group consisting of carbon monoxide, halogenated organic compounds, non-halogenated organic compounds and mixtures thereof, comprising the steps of: a) providing a gas stream comprising halogenated and non-halogenated organic compounds and CO; and b) contacting the gas stream with a catalyst at a temperature of from 100C to 600C with an effective amount of oxygen, **characterized in that**, a catalyst according to claims 1 to 10 is applied.
